# EUROPÄISCHE PATENTSCHRIFT

(11) **EP 2 858 850 B1**
(45) Veröffentlichungstag und Bekanntmachung des Hinweises auf die Patenterteilung: **17.04.2019**
(21) Anmeldenummer: 13728361.0
(22) Anmeldetag: 05.06.2013
(51) Int. Cl.: B60L 11/18, H01M 2/10, H01M 2/20, H01M 2/34

(54) **AKKUMULATORANORDNUNG, STROMSCHIENENELEMENT DAFÜR SOWIE VERFAHREN ZUR HERSTELLUNG EINER AKKUMULATORANORDNUNG**
ACCUMULATOR ARRANGEMENT, BUSBAR ELEMENT THEREFOR AND METHOD FOR PRODUCING AN ACCUMULATOR ARRANGEMENT
ENSEMBLE ACCUMULATEUR, ÉLÉMENT BARRE OMNIBUS CONÇU POUR UN ENSEMBLE ACCUMULATEUR ET PROCÉDÉ DE PRODUCTION D'UN ENSEMBLE ACCUMULATEUR

(30) Priorität: 06.06.2012 US 201261656388 P
(43) Veröffentlichungstag der Anmeldung: 15.04.2015
(73) Patentinhaber: Johnson Controls Advanced Power Solutions GmbH, 30419 Hannover (DE)
(72) Erfinder: EISERMANN, Henning, 31234 Edemissen (DE); BRETTSCHNEIDER, Kristina, 38642 Goslar (DE); BRENNER, Helge, 30451 Hannover (DE); HOH, Markus, 30823 Garbsen (DE); WIEGMANN, Martin, 27746 Borstel (DE); JANSEN, Marco, 29229 Groß Hehlen (DE)
(74) Vertreter: Trinks, Ole
(86) Internationale Anmeldenummer: PCT/EP2013/061567
(87) Internationale Veröffentlichungsnummer: WO 2013/182589

(56) Entgegenhaltungen:
- EP-A1- 2 172 994
- EP-A1- 2 731 171
- WO-A1-2006/112628

## Beschreibung

Die Erfindung betrifft eine Akkumulatoranordnung gemäß dem Oberbegriff des Anspruchs 1. Die Erfindung betrifft ferner ein Stromschienenelement gemäß Anspruch 9 sowie ein Verfahren zur Herstellung einer Akkumulatoranordnung gemäß Anspruch 10.

Die Druckschrift EP 2 172 994 A1 betrifft ein Batteriemodul mit einer Vielzahl von elektrochemischen Zellen, wobei jede der Zellen ein Gehäuse aufweist, das eine Längsachse und eine mit dem Gehäuse gekoppelte Kappe aufweist. Die Kappe weist ein Element auf, das dazu eingerichtet ist, als erster Anschluss der Zelle zu fungieren. Das aus diesem Stand der Technik bekannte Batteriemodul weist ferner eine Struktur auf, die eingerichtet ist zum Aufnehmen der Vielzahl von Zellen auf einer ersten Seite der Struktur, wobei die erste Seite der Struktur eine Vielzahl von Vertiefungen aufweist, wobei jede der Vielzahl von Vertiefungen dazu eingerichtet ist, wenigstens einen Teil des Elements aufzunehmen, sodass das Element für eine leitende Verbindung mit einem Anschluss einer benachbarten Zelle ausgerichtet ist.

Die Druckschrift WO 2006/112628 A1 betrifft eine Anschlussverbindungsvorrichtung für Akkumulatoren.

Die Druckschrift EP 2 731 171 A1 betrifft ein Batterieverdrahtungsmodul für eine Batterie, das an einer Batteriegruppe angebracht ist, die eine Vielzahl von Batterien mit jeweils einem positiven und einem negativen Elektrodenanschluss aufweist. Das Batterieverdrahtungsmodul umfasst eine Vielzahl von Verbindungseinheiten, die miteinander in einer Batterieanordnungsrichtung, in der die Batterien angeordnet sind, verbunden sind. Jede der Verbindungseinheiten weist eine Sammelschiene und ein Sammelschienengehäuse auf, wobei die Sammelschiene über eine obenliegende Öffnung in das Sammelschienengehäuse aufgenommen wird. Die Sammelschiene ist so konfiguriert, dass sie einen der Elektrodenanschlüsse einer Batterie mit einem der Elektrodenanschlüsse einer anderen Batterie verbindet. Ferner weist die Sammelschiene ein Paar Durchgangslöcher auf, die so ausgebildet sind, dass sie die Elektrodenanschlüsse aufnehmen.

Allgemein betrifft die Erfindung das Gebiet von Akkumulatoranordnungen, die mehrere in Reihe geschaltete Einzelakkumulatoren aufweisen. Insbesondere im Bereich von Elektrofahrzeugen und Hybridfahrzeugen werden solche Akkumulatoranordnungen eingesetzt, wobei an den elektrischen Außenanschlüssen der Ackumulatoranordnung teilweise beträchtliche Spannungen auftreten, die bis in den Bereich mehrerer tausend Volt reichen können. Solche Akkumulatoranordnungen werden dabei aus Einzelakkumulatoren zusammengestellt, die jeweils eine geringere Spannung aufweisen, die zumeist im für Menschen ungefährlichen Kleinspannungsbereich liegt. Als Kleinspannungsbereich wird der Spannungsbereich von 0 bis 60 Volt bezeichnet. Beim Zusammenschalten der Einzelakkumulatoren zur Reihenschaltung der gesamten Akkumulatoranordnung treten jedoch höhere, für Menschen gefährliche Hochspannungen auf. Bereits beim Zusammenbau der Akkumulatoranordnung wird nach dem Verbinden von zwei, drei oder mehr Einzelakkumulatoren der für Menschen ungefährliche Spannungsbereich verlassen, so dass besondere Sicherheitsvorkehrungen erforderlich sind.

Eine vergleichbare Problematik ergibt sich bei der Reparatur und Wartung solcher Akkumulatoranordnungen, z. B. wenn ein Einzelakkumulator ausgetauscht werden muss. Auch dann können die mit der Wartung befassten Personen wieder in Kontakt mit der Hochspannung kommen, so dass wiederum besondere Sicherheitsvorkehrungen erforderlich sind.

Der Erfindung liegt die Aufgabe zugrunde, eine Akkumulatoranordnung der zuvor erläuterten Art anzugeben, die eine erhöhte Sicherheit gegenüber Hochspannungsunfällen bietet. Ferner soll ein hierfür geeignetes Stromschienenelement für eine solche Akkumulatoranordnung und ein Verfahren zur Herstellung einer Ackumulatoranordnung mit erhöhter Sicherheit angegeben werden.

Diese Aufgabe wird gemäß Anspruch 1 gelöst durch eine Akkumulatoranordnung, die mehrere in Reihe geschaltete Einzelakkumulatoren aufweist, wobei jeder Einzelakkumulator als von außen zugängliche Anschlusspole wenigstens einen Pluspol und einen Minuspol aufweist, wobei zur Bildung der Reihenschaltung Stromschienenelemente an den Anschlusspolen befestigt sind, die jeweils einen Minuspol eines Einzelakkumulators mit einem Pluspol eines anderen Einzelakkumulators verbinden, wobei die Stromschienenelemente wenigstens ein elektrisch leitendes Verbinderelement, das elektrisch (und mechanisch) mit den jeweils zwei Anschlusspolen verbunden ist, und eine Isolationskappe aus isolierendem Material aufweisen, wobei die Isolationskappe an dem Verbinderelement fixiert ist und über das Verbinderelement in Richtung zu wenigstens einem benachbarten Stromschienenelement hinausragt und mittels des hinausragenden Bereichs das benachbarte Stromschienenelement wenigstens teilweise überdeckt, wobei durch die konstruktive Gestaltung eine bestimmte Montagereihenfolge dieser Stromschienenelemente vorgegeben ist, wobei der hinausragende Bereich einen Verbinderaufnahmebereich einer Isolationskappe eines benachbarten Stromschienenelements überdeckt.

Die Erfindung hat den Vorteil, dass die erhöhte Sicherheit gegenüber Hochspannungsunfällen bereits konstruktiv berücksichtigt ist, indem die Stromschienenelemente infolge ihrer Gestaltung eine bestimmte Montagereihenfolge erzwingen, durch die die Sicherheit gewährleistet werden kann. Ein Monteur, der die Akkumulatoranordnung zusammenbaut, ist gezwungen, einem bestimmten Handlungsablauf zu folgen, andernfalls ist eine Montage der Akkumulatoranordnung bereits durch die konstruktive Ausgestaltung der Stromschienenelemente verhindert. Es müssen die Stromschienenelemente nach und nach von einem Einzelakkumulator zum nächsten montiert werden. Die konstruktive Gestaltung des Stromschienenelements stellt dabei sicher, dass niemals zwei oder mehr bereits in Reihe geschaltete Einzelakkumulatoren an deren spannungsführenden Teilen, insbesondere den Anschlusspolen, berührt werden können. Eine Berührung ist nur bei Anschlusspolen noch nicht in Reihe geschalteter Einzelakkumulatoren möglich, was aber ungefährlich ist. Die Erfindung erlaubt damit einen modularen und zugleich sicheren Aufbau der gesamten Stromschienenanordnung.

Im Falle einer Wartung oder Reparatur der Akkumulatoranordnung wird durch die konstruktive Gestaltung des Stromschienenelements ebenfalls ein sicherer Ablauf vorgegeben. Es müssen die Stromschienenelemente der Reihe nach entfernt werden. Auch hierbei kann niemals eine Reihenschaltung von zwei oder mehr Einzelakkumulatoren an deren spannungsführenden Teilen berührt werden.

Ein weiterer Vorteil der Erfindung besteht darin, dass zugleich auch unbeabsichtigte Kurzschlüsse während der Montage oder Demontage der Akkumulatoranordnung durch das Stromschienenelement verhindert werden.

Ein weiterer Vorteil der Erfindung besteht darin, dass auf einen Trennschalter oder einen Trennstecker, der bei Lösungen im Stand der Technik zur Trennung des Hochspannungskreises für Servicearbeiten erforderlich ist, im vorliegenden Fall verzichtet werden kann. Dies hat wiederum den Vorteil, dass auf solche zusätzliche Kosten und möglicherweise zusätzliche Fehlerquellen verursachende Bauteile verzichtet werden kann. Zudem wird der elektrische Stromfluss nicht durch weitere Bauteile wie den genannten Trennschalter oder Trennstecker beeinträchtigt.

Ein weiterer Vorteil der Erfindung besteht darin, dass weitere einfach realisierbare, kostengünstige Gestaltungsmöglichkeiten der Stromschienenelemente bereit gestellt werden mit denen durch konstruktive Gestaltung der Stromschienenelemente eine bestimmte Montagereihenfolge dieser Stromschienenelemente vorgegeben werden kann.

Ein weiterer Vorteil der Erfindung besteht darin, dass das Stromschienenelement durch seine Isolationskappe nicht nur das elektrisch leitende Verbinderelement desselben Stromschienenelements schützen kann, sondern auch mittels eines hinausragenden Bereichs ein benachbartes Stromschienenelement sichert. Die Sicherung erfolgt dadurch, dass der hinausragende Bereich das benachbarte Stromschienenelement wenigstens teilweise überdeckt. Hierdurch wird bereits konstruktiv eine bestimmte Reihenfolge des Zusammenbaus der Einzelakkumulatoren und der Stromschienenelemente vorgegeben. Die konstruktive Gestaltung des Stromschienenelements mit der Isolationskappe stellt dabei sicher, dass niemals zwei oder mehr bereits in Reihe geschaltete Einzelakkumulatoren an deren spannungsführenden Teilen, insbesondere den Anschlusspolen, berührt werden können.

Gemäß einer vorteilhaften Weiterbildung der Erfindung überdeckt ein Stromschienenelement ein benachbartes Stromschienenelement wenigstens teilweise. Hierdurch kann auf einfache, kostengünstige Weise eine konstruktive Gestaltung der Stromschienenelemente geschaffen werden, durch die eine bestimmte Montagereihenfolge dieser Stromschienenelemente vorgegeben ist.

Durch die Überdeckung wird bewirkt, dass das überdeckte, benachbarte Stromschienenelement nicht nach dem überdeckenden Stromschienenelement verbaut werden kann, sondern nur in umgekehrter Reihenfolge. Entsprechendes gilt für die Demontage, bei der durch die Überdeckung ebenfalls eine bestimmte Reihenfolge der Stromschienenelemente vorgegeben ist.

Gemäß einem weiteren Aspekt überdeckt die Isolationskappe des Stromschienenelementes dessen Verbinderelement zumindest im an den Anschlusspolen befestigten Zustand. Die Isolationskappe muss dabei nicht am vollen Umfang das Verbinderelement überdecken, sondern je nach Ausgestaltung des Gehäuses der Einzelakkumulatoren ist in vielen Fällen eine Überdeckung an zwei von sechs vorhandenen Raumseiten ausreichend. Dadurch, dass mehrere Stromschienenelemente mit ihren Isolationskappen sozusagen in einer Reihe angeordnet werden, ergibt sich eine gesamte Abdeckung der darunter angeordneten Verbinderelemente.

Gemäß einer vorteilhaften Weiterbildung der Erfindung hat die Isolationskappe des Stromschienenelements wenigstens eine Öffnung, die Zugang zu dem Verbinderelement des Stromschienenelements oder einem Polbefestigungsmittel zur Befestigung des Verbinderelements an einem Anschlusspol durch die Isolationskappe hindurch erlaubt. Dies hat den Vorteil, dass das Stromschienenelement als bereits vorbereitete Baueinheit aus dem Verbinderelement und der daran fixierten Isolationskappe an den Einzelakkumulatoren befestigt werden kann. Hierdurch kann die Sicherheit weiter gesteigert werden und die Gefahr von Hochspannungsunfällen weiter minimiert werden. Insbesondere wird hierdurch auch eine fehlerhafte Anwendung des Stromschienenelements vermieden, da dieses bereits als eine Einheit mit dem Verbinderelement und der Isolationskappe bereit steht und als eine Einheit verbaut wird. Durch die wenigstens eine Öffnung, bzw. in der Regel zwei Öffnungen, kann das Strom-Schienenelement, nachdem es zunächst in Position gebracht wurde, über Polbefestigungsmittel durch die Isolationskappe hindurch mittels eines Werkzeugs elektrisch und mechanisch an den Anschlusspolen befestigt werden. Als Polbefestigungsmittel werden z. B. Schrauben verwendet, wobei an jeweils einem Anschlusspol eine Schraube angeschraubt wird und hierdurch das Verbinderelement an den Anschlusspol gepresst wird. Jedoch sind auch andere Polbefestigungsmittel einsetzbar, wie z. B. Klauenbefestigungen, Polklammern oder Polklemmen.

Gemäß weiteren Aspekt ist die wenigstens eine Öffnung in der Isolationskappe nicht in dem hinausragenden Bereich der Isolationskappe angeordnet. Vielmehr ist die Öffnung in dem Bereich angeordnet, wo unterhalb der Isolationskappe das Verbinderelement angeordnet ist.

Gemäß einer vorteilhaften Weiterbildung der Erfindung überdeckt der hinausragende Bereich der Isolationskappe die wenigstens eine Öffnung der Isolationskappe eines benachbarten Stromschienenelements. Dies hat den Vorteil, dass die zunächst zum sicheren Anbringen eines Stromschienenelements erforderliche Öffnung bzw. die Öffnungen nach dem Anbringen des nächsten Stromschienenelements durch dessen Isolationskappe wiederum überdeckt werden und damit vor einer unbeabsichtigten Berührung geschützt werden.

Gemäß einer vorteilhaften Weiterbildung der Erfindung ist das Verbinderelement über eine Scharnierverbindung, eine Schnappverbindung oder sonstige lösbare oder unlösbare Verbindungsmittel an der Isolationskappe fixiert. Insbesondere soll die Fixierung derart ausgebildet sein, dass sie sich im Laufe der Montage der Akkumulatoranordnung nicht unbeabsichtigt lösen kann. Auch ein absichtliches Lösen der Fixierung soll nach Möglichkeit weitgehend unterbunden werden. Dies hat den Vorteil, dass für die Endmontage der Akkumulatoranordnung das Stromschienenelement zwingend als fertige Einheit aus dem Verbinderelement und der zugeordneten Isolationskappe bereitgestellt wird, die auch nicht ohne weiteres voneinander getrennt werden können.

Gemäß einer vorteilhaften Weiterbildung der Erfindung weist die Isolationskappe wenigstens ein Zusatzbefestigungsmittel zur Befestigung des Stromschienenelements an einem benachbarten Stromschienenelement auf. Hierdurch kann die Isolationskappe mechanisch an dem benachbarten Stromschienenelement angekoppelt werden, was zu einer zusätzlichen Stabilisierung der gesamten Anordnung der mehreren in Reihe angeordneten Stromschienenelemente führt. Zudem kann durch geeignete Gestaltung des Zusatzbefestigungsmittels der Arbeitsablauf beim Zusammenbau der Akkumulatoranordnung weiter in einer gewünschten Weise beschränkt werden, die zu einem sicheren Arbeitsablauf führt. Das Zusatzbefestigungsmittel kann z. B. eine Rast- oder Clipbefestigung sein, mittels der die Isolationskappe eines Stromschienenelements an dem benachbarten Stromschienenelement angekoppelt wird. Die Isolationskappe eines Stromschienenelements kann dabei an die Isolationskappe oder das Verbinderelement oder an beide Elemente des benachbarten Stromschienenelements angekoppelt werden. Gemäß einem weiteren Aspekt weist das Stromschienenelement ein Aufnahmemittel für das Zusatzbefestigungsmittel eines benachbarten Stromschienenelements auf, wobei das Aufnahmemittel als Gegenstück zu dem Zusatzbefestigungsmittel ausgebildet ist und zur Aufnahme des Zusatzbefestigungsmittels dient. So kann beispielsweise das Zusatzbefestigungsmittel zusammen mit dem Aufnahmemittel eine Art Gelenk oder Scharnier bilden, so dass nach dem Zusammenkoppeln des Zusatzbefestigungsmittels mit dem Aufnahmemittel des benachbarten Stromschienenelements das neu anzubringende Stromschienenelement über eine Verschwenkbewegung in die endgültige Montageposition gebracht werden muss, in der es dann erst an den Anschlusspolen befestigt werden kann.

Gemäß einem weiteren Aspekt ist das Zusatzbefestigungsmittel an dem hinausragenden Bereich der Isolationskappe angeordnet. Gemäß einem weiteren Aspekt ist das Aufnahmemittel für das Zusatzbefestigungsmittel im Bereich des hinausragenden Bereichs der Isolationskappe angeordnet, insbesondere an der dem Verbinderelement zugewandten Endseite des hinausragenden Bereichs.

Gemäß einer vorteilhaften Weiterbildung der Erfindung weist das Stromschienenelement wenigstens eine Aufnahmekammer zur Aufnahme eines Polbefestigungsmittels zur Befestigung des Verbinderelements an einem Anschlusspol auf. Dies hat den Vorteil, dass das Polbefestigungsmittel an einer definierten Stelle, nämlich der Aufnahmekammer, vorgehalten werden kann und auch bereits zusammen mit dem vormontierten Stromschienenelement bereitgestellt werden kann. Die Aufnahmekammer kann z. B. in der Isolationskappe und/oder dem Verbinderelement gebildet sein. So kann die Aufnahmekammer z. B. zum Teil durch das Verbinderelement abgedeckt werden, so dass das Polbefestigungsmittel in Folge einer Rückhaltung durch das Verbinderelement während der Montage nicht mehr aus der Aufnahmekammer herausfallen kann. Dies begünstigt eine schnelle und einfache Montage der Akkumulatoranordnung. Vorteilhaft ist es, das Stromschienenelement mit wenigstens zwei Aufnahmekammern zur Aufnahme von jeweils einem Polbefestigungsmittel auszubilden.

Gemäß einer vorteilhaften Weiterbildung der Erfindung weist die Akkumulatoranordnung wenigstens einen elektrischen Außenanschluss auf, der zur Bereitstellung der Akkumulatorenergie an einen Energieverbraucher eingerichtet ist, wobei der Außenanschluss über ein Außenanschlusselement mit einem Energieverbraucher verbindbar ist, und wobei das Außenanschlusselement wenigstens ein elektrisch leitendes Kontaktelement, das elektrisch (und mechanisch) mit einem Anschlusspol eines Einzelakkumulators verbunden ist, und eine Isolationskappe aus isolierendem Material aufweist, das an dem Kontaktelement fixiert ist, wobei die Isolationskappe über das Kontaktelement in Richtung zu wenigstens einem benachbarten Stromschienenelement hinausragt und mittels des hinausragenden Bereichs das benachbarte Stromschienenelement wenigstens teilweise überdeckt. Dies hat den Vorteil, dass das erfindungsgemäße Prinzip des modularen Aufbaus der Stromschiene auch bis hin zu den Außenanschlusselementen erweitert werden kann, so dass auch diese in das Sicherheitskonzept einbezogen sind.

Gemäß nicht beanspruchten Weiterbildungen des Außenanschlusselements ist vorgesehen, dass
- die Isolationskappe des Außenanschlusselementelements wenigstens eine Öffnung hat, die Zugang zu dem Kontaktelement des Außenanschlusselements oder einem Polbefestigungsmittel zur Befestigung des Kontaktelements an einem Anschlusspol durch die Isolationskappe hindurch erlaubt,
- der hinausragende Bereich der Isolationskappe des Außenanschlusselementelements die wenigstens eine Öffnung der Isolationskappe eines benachbarten Stromschienenelements überdeckt,
- das Kontaktelement über eine Scharnierverbindung, eine Schnappverbindung oder sonstige lösbare oder unlösbare Verbindungsmittel an der Isolationskappe des Außenanschlusselements fixiert ist,
- die Isolationskappe des Außenanschlusselements wenigstens ein Zusatzbefestigungsmittel zur Befestigung des Außenanschlusselements an einem benachbarten Stromschienenelement aufweist,
- die Isolationskappe des Außenanschlusselements wenigstens eine Aufnahmekammer zur Aufnahme eines Polbefestigungsmittels zur Befestigung des Kontaktelements an einem Anschlusspol aufweist.

Hierdurch können die zuvor bereits zum Stromschienenelement genannten Vorteile ebenfalls beim Außenanschlusselement realisiert werden.

Die eingangs genannte Aufgabe wird gemäß Anspruch 9 gelöst durch ein Stromschienenelement für eine Akkumulatoranordnung der zuvor erläuterten Art, wobei das Stromschienenelement wenigstens ein elektrisch leitendes Verbinderelement, das elektrisch mit jeweils zwei Anschlusspolen von Einzelakkumulatoren zu verbinden ist, und eine Isolationskappe aus isolierendem Material aufweist, die an dem Verbinderelement über Verbindungsmittel fixiert ist, wobei die Isolationskappe über das Verbinderelement derart hinausragt, dass mittels des hinausragenden Bereichs ein benachbartes Stromschienenelement der Reihenschaltung der Einzelakkumulatoren wenigstens teilweise überdeckbar ist. Das Stromschienenelement kann insbesondere durch die zuvor bereits erläuterten vorteilhaften Weiterbildungen der Erfindung weiter ausgestaltet werden.

Die eingangs genannte Aufgabe wird außerdem gemäß Anspruch 10 gelöst durch ein Verfahren zur Herstellung einer Akkumulatoranordnung nach einem der Ansprüche 1 bis 8, mit den folgenden Schritten:
a) Bereitstellen der zu einer Reihenschaltung zusammen zu schaltenden Einzelakkumulatoren,
b) Anbringen einer elektrischen Anschlussleitung oder eines sonstigen elektrischen Anschlussmoduls an einem Anschlusspol des ersten Einzelakkumulators der Reihenschaltung,
c) Anbringen eines Stromschienenelements an dem anderen Anschlusspol des ersten Einzelakkumulators und einem Anschlusspol des nächsten Einzelakkumulators der Reihenschaltung,
d) Anbringen eines Stromschienenelements an dem anderen Anschlusspol des vorhergehenden Einzelakkumulators und einem Anschlusspol des nächsten Einzelakkumulators der Reihenschaltung,
e) Wiederholen des Schritts d), bis der letzte Einzelakkumulator der Reihenschaltung mit dem vorletzten Einzelakkumulator über ein Stromschienenelement verbunden ist,
f) Anbringen einer elektrischen Anschlussleitung oder eines sonstigen elektrischen Anschlussmoduls am verbleibenden Anschlusspol des letzten Einzelakkumulators,
wobei die Stromschienenelemente wenigstens ein elektrisch leitendes Verbinderelement, das elektrisch mit den jeweils zwei Anschlusspolen verbunden ist, und eine Isolationskappe aus isolierendem Material aufweisen, wobei die Isolationskappe an dem Verbinderelement fixiert wird und über das Verbinderelement in Richtung zu wenigstens einem benachbarten Stromschienenelement hinausragt und mittels des hinausragenden Bereichs das benachbarte Stromschienenelement wenigstens teilweise überdeckt, wobei durch die konstruktive Gestaltung eine bestimmte Montagereihenfolge dieser Stromschienenelemente vorgegeben ist, wobei der hinausragende Bereich einen Verbinderaufnahmebereich einer Isolationskappe eines benachbarten Stromschienenelements überdeckt.

Das Verfahren erlaubt die sichere Herstellung einer Akkumulatoranordnung, wobei bei der Herstellung beteiligte Personen vor Hochspannungsunfällen geschützt sind und zudem die Gefahr von Kurzschlüssen während der Herstellung vermieden wird. Bei jedem Anbringen eines Stromschienenelements wird zugleich die bereits gebildete Reihenschaltung der Einzelakkumulatoren gegenüber der Außenwelt isoliert.

Für den Service oder eine Wartung der Akkumulatoranordnung kann diese in umgekehrter Reihenfolge der Schritte des Anspruchs 12 wieder demontiert werden, so dass eine oder mehrere Einzelakkumulatoren ausgetauscht werden können.

Gemäß einer vorteilhaften Weiterbildung der Erfindung ist vorgesehen, dass das Anbringen des Stromschienenelements im Schritt c) und/oder d) wie folgt durchgeführt wird:
i) Mechanisches Ankoppeln einer Isolationskappe des Stromschienenelements an einem benachbarten Stromschienenelement mittels wenigstens eines an der Isolationskappe des Stromschienenelements vorhandenen Zusatzbefestigungsmittels,
ii) Anbringen des Verbinderelements an den Anschlusspolen durch Polbefestigungsmittel, die durch Öffnungen der Isolationskappe hindurch mittels eines Werkzeugs betätigt werden.

Gemäß einer vorteilhaften Weiterbildung der Erfindung wird nach dem Schritt i) und vor dem Schritt ii) das Stromschienenelement durch eine Verschwenkbewegung in eine Montageposition gebracht, in der der Schritt ii) erst durchgeführt werden kann.

Auch hierdurch wird die sichere Montage und Demontage der Akkumulatoranordnung weiter gefördert.

Die Erfindung wird nachfolgend anhand von Ausführungsbeispielen unter Verwendung von Zeichnungen näher erläutert.

Es zeigen:
- Figur 1: eine fertiggestellte Akkumulatoranordnung und
- Figur 2: die Montage der Akkumulatoranordnung nach Art einer Explosionszeichnung und
- Figur 3: beispielhafte Schritte der Montage der Akkumulatoranordnung gemäß Figur 1 und

Figuren 4 bis 6 Schritte des Bereitstellens eines Stromschienenelements.

In den Figuren werden gleiche Bezugszeichen für einander entsprechende Elemente verwendet.

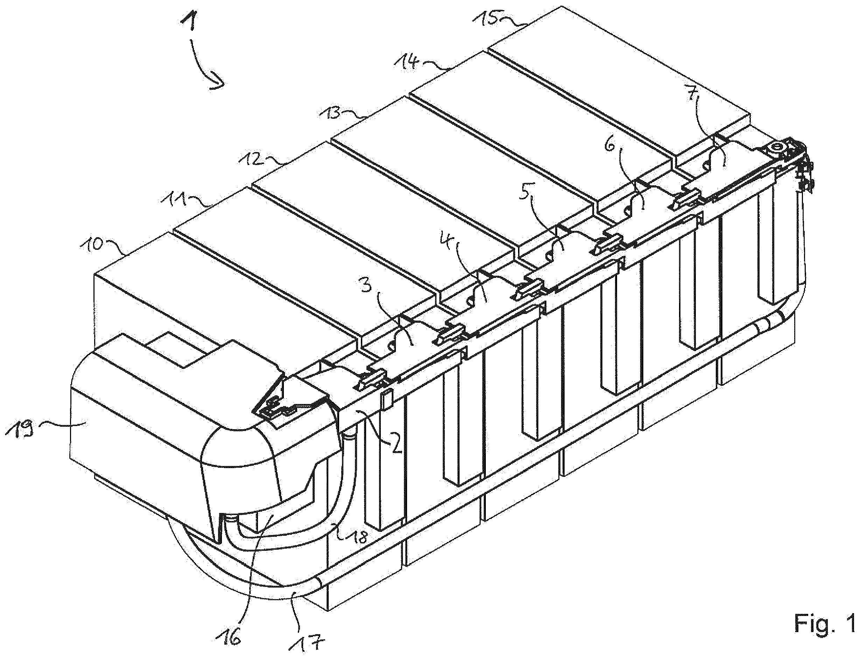

Die Figur 1 zeigt eine Akkumulatoranordnung 1, die sechs in Reihe geschaltete Einzelakkumulatoren 10, 11, 12, 13, 14, 15 aufweist. Die Einzelakkumulatoren können z. B., wie in Figur 1 erkennbar ist, eine prismatische, insbesondere eine quaderförmige äußere Form aufweisen. Die Einzelakkumulatoren 10, 11, 12, 13, 14, 15 weisen jeweils zwei von außen zugängliche Anschlusspole auf, nämlich einen Pluspol und einen Minuspol. Jeder Einzelakkumulator kann bereits aus einer Vielzahl einzelner Akkumulatorzellen, z. B. Rundzellen oder ähnlich, gebildet sein. Um solche Einzelakkumulatoren zu einer elektrisch leistungsfähigen Reihenschaltung zu verbinden, ist es bekannt, eine sog. Stromschienenanordnung (im Englischen auch als "bus bar" bezeichnet) vorzusehen, bei der jeweils zwei Einzelackumulatoren über ein Stromschienenstück verbunden sind. Die Gesamtheit der Stromschienenstücke wird dann als Stromschienenanordnung bezeichnet.

Gemäß der vorliegenden Erfindung ist die Stromschienenanordnung modular aus mehreren Stromschienenelementen ausgebildet, und zwar im dargestellten Ausführungsbeispiel aus den Stromschienenelementen 2, 3, 4, 5, 6. Diese zwingen bei der Montage der Akkumulatoranordnung zu einer bestimmten Montagereihenfolge der Stromschienenelemente aufgrund ihrer konstruktiven Gestaltung, wie nachfolgend noch näher erläutert wird.

An den jeweils endseitigen Anschlusspolen der Akkumulatoranordnung 1 sind Außenanschlusselemente angeordnet, einerseits am Einzelakkumulator 10 und andererseits am Einzelakkumulator 15 in Form des Außenanschlusselements 7. Das entsprechende Außenanschlusselement des Einzelakkumulators 10 ist in der Figur 1 nicht erkennbar, weil es von anderen Bauteilen überdeckt ist.

Die Reihenschaltung der Einzelakkumulatoren ist über die Außenanschlusselemente über elektrische Kabel 17, 18 mit einer elektrischen Baugruppe 16 verbunden. Die elektrische Baugruppe 16 ist zur Isolation und aus Sicherheitsgründen mittels einer Abdeckkappe 19 isolierend abgedeckt. Die elektrische Baugruppe 16 weist z. B. ein Relais bzw. ein Schütz auf, ggf. auch elektronische Bauteile, die eine Steuerschaltung bilden zur Steuerung des Relais bzw. Schützes und/oder zur Aufladung der Akkumulatoranordnung 1. Die elektrische Baugruppe 16 weist z. B. eine Steckverbindung zum Anstecken eines Fahrzeugsteckers auf, um die Akkumulatoranordnung 1 bei Verwendung in einem Fahrzeug elektrisch zu kontaktieren.

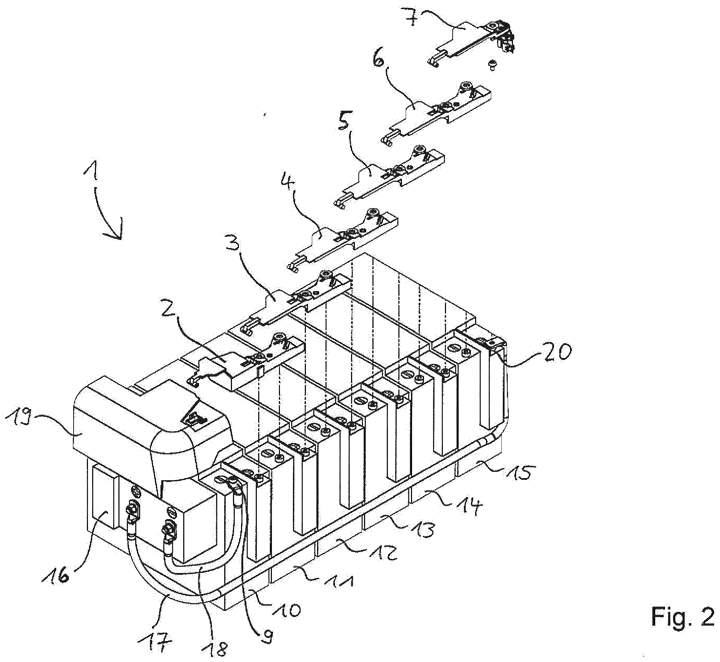

Die Figur 2 zeigt die Akkumulatoranordnung 1 gemäß Figur 1, wobei, ähnlich wie bei einer Explosionszeichnung, die Abdeckkappe 19, die Stromschienenelemente 2, 3, 4, 5, 6 sowie das Außenanschlusselement 7 von den Einzelakkumulatoren abgehoben dargestellt sind. Die Reihenfolge, in der die Bauteile 19, 2, 3, 3, 5, 6, 7 übereinander dargestellt sind, repräsentiert auch zugleich die durch die konstruktive Gestaltung dieser Bauteile vorgegebene Montagereihenfolge. Die höherliegenden Bauteile werden nach den niedriger gelegenen Bauteilen montiert.

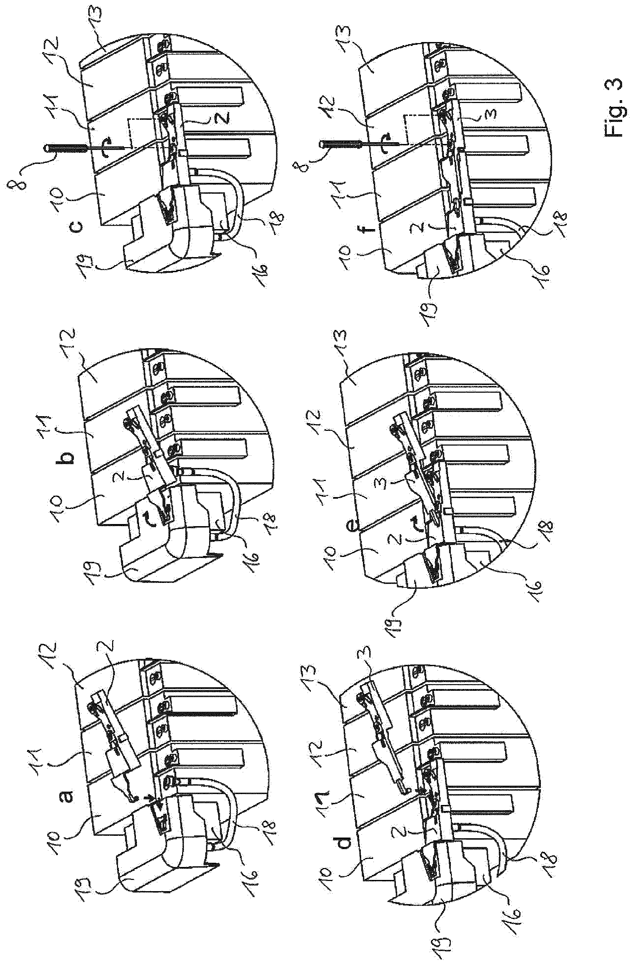

In der Figur 2 ist noch das andere elektrische Außenanschlusselement in Form des Außenanschlusselements 9 an dem ersten Einzelakkumulator 10 erkennbar. Anhand der Figur 3 sei beispielhaft die Montage der Akkumulatoranordnung 1 und insbesondere die durch die konstruktive Gestaltung vorgegebene Montagereihenfolge der Stromschienenelemente erläutert. Die Montage erfolgt in der Reihenfolge der Figurenteile a, b, c, d, e und schließlich f, die zugleich Montageschritte darstellen.

Im Montageschritt a) wird zunächst davon ausgegangen, dass die Abdeckkappe 19 bereits angebracht ist. Es wird dann das erste Stromschienenelement 2 montiert. Zunächst wird dieses, wie im Montageschritt a) erkennbar ist, mit einem Zusatzbefestigungsmittel in Form einer vorstehenden Befestigungsnase zu einem entsprechenden Aufnahmemittel für die Befestigungsnase, das an der Abdeckkappe 19 vorhanden ist, hingeführt. Im Schritt b) wird die Befestigungsnase in das Aufnahmemittel eingeführt und das Stromschienenelement 2 mittels einer Verschwenkbewegung nach unten zu den Anschlusspolen der Einzelakkumulatoren 10, 11, die über das Stromschienenelement 2 elektrisch miteinander verbunden werden sollen, hinbewegt. Das Stromschienenelement 2 befindet sich dann in der im Montageschritt c) dargestellten Lage. In dieser Lage können Polbefestigungsmittel, z. B. Schrauben, an den Anschlusspolen mittels eines Werkzeugs 8 befestigt werden. In einem darauf folgenden Montageschritt d) wird das nächste Stromschienenelement 3 an dem ersten Stromschienenelement 2 in gleicher Weise befestigt, wie das Stromschienenelement 2 an der Abdeckkappe 19 befestigt wurde. Eine Befestigungsnase des Strom-Schienenelements 3 wird in Aufnahmemittel des Stromschienenelements 2 eingeführt. Es erfolgt wiederum die Verschwenkbewegung im Montageschritt e) in die im Montageschritt f) dargestellte Montageposition. Schließlich wird wiederum mit einem Werkzeug 8 eine Befestigung des Stromschienenelements 3 mittels der Polbefestigungsmittel an den Anschlusspolen der hiermit zu verbindenden Einzelakkumulatoren 11, 12 durchgeführt. In gleicher Weise werden die weiteren Stromschienenelemente 4, 5, 6 sowie das Außenanschlusselement 7 befestigt.

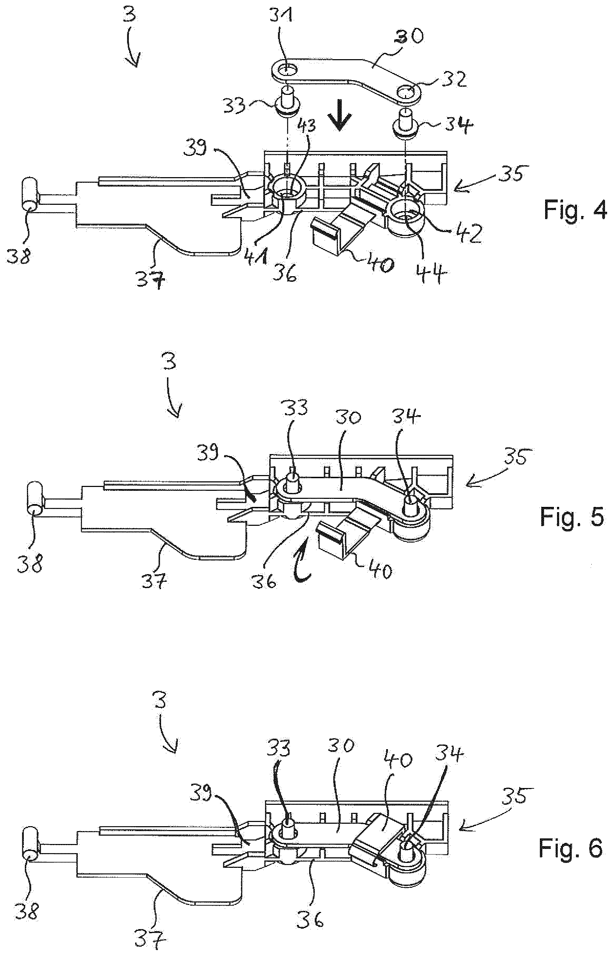

Anhand der Figuren 4 bis 6 wird beispielhaft der Aufbau der Stromschienenelemente 2, 3, 4, 5, 6 erläutert. Das Außenanschlusselement 7 ist im Prinzip gleicher Weise aufgebaut, nur dass statt eines Stromschienenelements, das zwei Außenanschlüsse miteinander verbindet, nur ein Kontaktelement zum Anschließen an einen Anschlusspol eines Einzelakkumulators vorhanden ist.

Die Figuren 4 bis 6 zeigen das Stromschienenelement 3 in einer Ansicht, die im Prinzip entgegengesetzt zu den Ansichten in den Figuren 1 bis 3 ist. Es wird sozusagen von der Unterseite, dort wo das elektrisch leitende Verbinderelement zu sehen ist, auf das Stromschienenelement 3 geblickt.

Wie in Figur 4 erkennbar ist, weist das Stromschienenelement 3 als separate Bauteile eine Isolationskappe 35, ein elektrisch leitendes Verbinderelement 30 sowie zwei Polbefestigungsmittel in Form von Schrauben 33, 34 auf. Das Verbinderelement 30 ist z. B. in Form eines Blechstreifens ausgebildet, an dem in den endseitigen Bereichen, an denen eine Verbindung mit Anschlusspolen der Einzelakkumulatoren erfolgen soll, Öffnungen 31, 32 zur Durchführung der Schrauben 33, 34 vorgesehen sind. Die Isolationskappe 35 ist aus elektrisch isolierendem Material hergestellt, z. B. aus einem Kunststoff wie z. B. Polypropylen.

Erkennbar ist, dass die Isolationskappe 35 über eine ungewöhnliche Formgebung verfügt und insbesondere erheblich länger ist als das Verbinderelement 30, insbesondere durch einen über das Verbinderelement 30 hinausragenden Bereich 37. Ein Verbinderaufnahmebereich 36 der Isolationskappe 35 dient zur Aufnahme des Verbinderelements 30. Der Verbinderaufnahmebereich 36 weist zwei Aufnahmekammern 41, 42 auf, die zur Aufnahme der Polbefestigungsmittel, zumindest zur teilweisen Aufnahme, vorgesehen sind. Die Polbefestigungsmittel 33, 34 können mit ihren Schraubenköpfen in die jeweilige Aufnahmekammer 41, 42 eingelegt werden. Danach kann das Verbinderelement 30 aufgelegt werden. Es ergibt sich dann die in Figur 5 dargestellte Anordnung. Wie erkennbar ist, umgibt die Isolationskappe 35 zumindest in dem Verbinderaufnahmebereich 36 das Verbinderelement 30 an wenigstens zwei Raumseiten, was nach der Anbringung an den Einzelakkumulatoren zu einer weitgehenden Kapselung des Verbinderelements 30 durch die Isolationskappe 35 und die Gehäuseaußenseiten der Einzelakkumulatoren führt.

An den Verbinderaufnahmebereich 36 der Isolationskappe 35 kann ein Halteclip 40 einstückig angeformt sein, z. B. in einem Kunststoffspritzgussprozess. Der Halteclip 40 kann entsprechend dem in Figur 5 dargestellten Pfeil um das Verbinderelement 30 herumgeschwenkt werden und dann, wie in Figur 6 erkennbar ist, wieder mit einem entsprechenden Abschnitt der Isolationskappe 35 verrastet werden. Auf diese Weise ist das Verbinderelement 30 unverlierbar und nicht ohne weiteres entfernbar an der Isolationskappe 35 fixiert. Die Fixierung des Verbinnerelements 30 in horizontaler Richtung erfolgt u. a. über die angelegten Polbefestigungsmittel 33, 34. Die Polbefestigungsmittel 33, 34 werden ihrerseits wiederum durch das Verbinderelement 30 in ihren Aufnahmekammern 41, 42 gehalten und können nicht verloren gehen.

In den zuvor anhand der Figur 3 erläuterten Montageschritten der Stromschienenelemente 2, 3, 4, 5, 6 und des Außenanschlusselements 7 sind diese schon entsprechend mit dem Verbinderelement 30 bzw. einem entsprechenden Außenanschlusselement und Polbefestigungsmitteln 33, 34 vormontiert bereitgestellt und werden in dieser Form dann zur Endmontage der Akkumulatoranordnung eingesetzt. Hierzu weist die Isolationskappe 35 im Bereich der jeweiligen Aufnahmekammer 41, 42 eine jeweilige Öffnung 43, 44 auf, durch die mittels des Werkzeugs 8 das jeweilige Polbefestigungsmittel 33, 34 mit einem Anschlusspol verschraubt werden kann.

Die Isolationskappe 35 weist noch den bereits erwähnten hinausragenden Bereich 37 auf. Dieser kann einstückig an den Verbinderaufnahmebereich 36 angeformt sein oder auch als separates Bauteil ausgebildet sein. Der hinausragende Bereich ist derart geformt, dass er ein benachbartes Stromschienenelement wenigstens teilweise überdeckt. Vorteilhaft überdeckt der hinausragende Bereich dabei den Verbinderaufnahmebereich 36 eines benachbarten Stromschienenelements, bzw. dessen Isolationskappe, wobei zumindest die von außen zum Verschrauben der Polbefestigungsmittel 33, 34 in den Aufnahmekammern 41, 42 vorgesehenen Öffnungen 43, 44 durch den hinausragenden Bereich 37 überdeckt werden, zumindest so weit, dass nicht versehentlich ein Kontakt zu den stromführenden Polbefestigungsmitteln erfolgen kann.

An dem hinausragenden Bereich 37 ist ferner ein Zusatzbefestigungsmittel 38 vorhanden, das einstückig an dem hinausragenden Bereich 37 angeformt sein kann oder als separates Bauteil daran angebracht sein kann. Das Zusatzbefestigungsmittel 38 bildet die zuvor erwähnte Befestigungsnase, die in ein benachbartes Stromschienenelement eingeführt werden kann und die Durchführung der in Figur 3b und 3e dargestellten Schwenkbewegung erforderlich macht. Hierfür wird das Zusatzbefestigungsmittel 38 in einen Aufnahmebereich 39 eines benachbarten Stromschienenelementes bzw. von dessen Isolationskappe 35 eingeführt. Das Zusatzbefestigungsmittel 38 bildet dann mit dem Aufnahmebereich 39 eine Art Gelenk- bzw. Scharnieranordnung, die die erwähnte Schwenkbewegung ermöglicht.

## Patentansprüche

1. Akkumulatoranordnung (1), die mehrere in Reihe geschaltete Einzelakkumulatoren (10, 11, 12, 13, 14, 15) aufweist, wobei jeder Einzelakkumulator (10, 11, 12, 13, 14, 15) als von außen zugängliche Anschlusspole wenigstens einen Pluspol und einen Minuspol aufweist, wobei zur Bildung der Reihenschaltung Stromschienenelemente (2, 3, 4, 5, 6) an den Anschlusspolen befestigt sind, die jeweils einen Minuspol eines Einzelakkumulators mit einem Pluspol eines anderen Einzelakkumulators verbinden, wobei die Stromschienenelemente (2, 3, 4, 5, 6) wenigstens ein elektrisch leitendes Verbinderelement (30), das elektrisch mit den jeweils zwei Anschlusspolen verbunden ist, und eine Isolationskappe (35) aus isolierendem Material aufweisen, wobei die Isolationskappe (35) an dem Verbinderelement (30) fixiert ist und über das Verbinderelement (30) in Richtung zu wenigstens einem benachbarten Stromschienenelement (2, 3, 4, 5, 6) hinausragt und mittels des hinausragenden Bereichs (37) das benachbarte Stromschienenelement (2, 3, 4, 5, 6) wenigstens teilweise überdeckt, wobei durch die konstruktive Gestaltung eine bestimmte Montagereihenfolge dieser Stromschienenelemente vorgegeben ist, **dadurch gekennzeichnet, dass** der hinausragende Bereich (37) einen Verbinderaufnahmebereich (36) einer Isolationskappe (35) eines benachbarten Stromschienenelements (2, 3, 4, 5, 6) überdeckt.

2. Akkumulatoranordnung nach Anspruch 1, **dadurch gekennzeichnet, dass** ein Stromschienenelement (2, 3, 4, 5, 6) ein benachbartes Stromschienenelement (2, 3, 4, 5, 6) wenigstens teilweise überdeckt.

3. Akkumulatoranordnung nach Anspruch 1 oder 2, **dadurch gekennzeichnet, dass** die Isolationskappe (35) des Stromschienenelements (2, 3, 4, 5, 6) wenigstens eine Öffnung (43, 44) hat, die Zugang zu dem Verbinderelement (30) des Stromschienenelements (2, 3, 4, 5, 6) oder einem Polbefestigungsmittel (33, 34) zur Befestigung des Verbinderelements (30) an einem Anschlusspol durch die Isolationskappe (35) hindurch erlaubt.

4. Akkumulatoranordnung nach Anspruch 3, **dadurch gekennzeichnet, dass** der hinausragende Bereich (37) der Isolationskappe (35) die wenigstens eine Öffnung (43, 44) der Isolationskappe (35) eines benachbarten Stromschienenelements (2, 3, 4, 5, 6) überdeckt.

5. Akkumulatoranordnung nach einem der Ansprüche 1 bis 4, **dadurch gekennzeichnet, dass** das Verbinderelement (30) über eine Scharnierverbindung, eine Schnappverbindung (40) oder sonstige lösbare oder unlösbare Verbindungsmittel an der Isolationskappe (35) fixiert ist.

6. Akkumulatoranordnung nach einem der Ansprüche 1 bis 5, **dadurch gekennzeichnet, dass** die Isolationskappe (35) wenigstens ein Zusatzbefestigungsmittel (38) zur Befestigung des Stromschienenelements (2, 3, 4, 5, 6) an einem benachbarten Stromschienenelement aufweist.

7. Akkumulatoranordnung nach einem der Ansprüche 1 bis 6, **dadurch gekennzeichnet, dass** das Stromschienenelement (2, 3, 4, 5, 6) wenigstens eine Aufnahmekammer (41, 42) zur Aufnahme eines Polbefestigungsmittels (33, 34) zur Befestigung des Verbinderelements (30) an einem Anschlusspol aufweist.

8. Akkumulatoranordnung nach einem der vorhergehenden Ansprüche, **dadurch gekennzeichnet, dass** die Akkumulatoranordnung (1) wenigstens einen elektrischen Außenanschluss (20) aufweist, der zur Bereitstellung der Akkumulatorenergie an einen Energieverbraucher eingerichtet ist, wobei der Außenanschluss (20) über ein Außenanschlusselement (7) mit einem Energieverbraucher verbindbar ist, und wobei das Außenanschlusselement (7) ein benachbartes Stromschienenelement (2, 3, 4, 5, 6) wenigstens teilweise überdeckt.

9. Stromschienenelement (2, 3, 4, 5, 6) für eine Akkumulatoranordnung (1) nach einem der vorhergehenden Ansprüche, **dadurch gekennzeichnet, dass** das Stromschienenelement (2, 3, 4, 5, 6) wenigstens ein elektrisch leitendes Verbinderelement (30), das elektrisch mit jeweils zwei Anschlusspolen von Einzelakkumulatoren (10, 11, 12, 13, 14, 15) zu verbinden ist, und eine Isolationskappe (35) aus isolierendem Material aufweist, die an dem Verbinderelement (30) über Verbindungsmittel (40) fixiert ist, wobei die Isolationskappe (35) über das Verbinderelement (30) derart hinausragt, dass mittels des hinausragenden Bereichs (37) ein benachbartes Stromschienenelement (2, 3, 4, 5, 6) der Reihenschaltung der Einzelakkumulatoren (10, 11, 12, 13, 14, 15) wenigstens teilweise überdeckbar ist, **dadurch gekennzeichnet, dass** der hinausragende Bereich (37) einen Verbinderaufnahmebereich (36) einer Isolationskappe (35) eines benachbarten Stromschienenelements (2, 3, 4, 5, 6) überdeckt.

10. Verfahren zur Herstellung einer Akkumulatoranordnung (1) nach einem der Ansprüche 1 bis 8, mit den folgenden Schritten:
a) Bereitstellen der zu einer Reihenschaltung zusammen zu schaltenden Einzelakkumulatoren (10, 11, 12, 13, 14, 15),
b) Anbringen einer elektrischen Anschlussleitung (18) oder eines sonstigen elektrischen Anschlussmoduls (16) an einem Anschlusspol des ersten Einzelakkumulators (10) der Reihenschaltung,
c) Anbringen eines Stromschienenelements (2) an dem anderen Anschlusspol des ersten Einzelakkumulators (10) und einem Anschlusspol des nächsten Einzelakkumulators (11) der Reihenschaltung,
d) Anbringen eines Stromschienenelements (3, 4, 5, 6) an dem anderen Anschlusspol des vorhergehenden Einzelakkumulators (11, 12, 13, 14) und einem Anschlusspol des nächsten Einzelakkumulators (12, 13, 14, 15) der Reihenschaltung derart, dass ein schon montiertes benachbartes Stromschienenelement wenigstens teilweise überdeckt ist,
e) Wiederholen des Schritts d), bis der letzte Einzelakkumulator (15) der Reihenschaltung mit dem vorletzten Einzelakkumulator (14) über ein Stromschienenelement (6) verbunden ist,
f) Anbringen einer elektrischen Anschlussleitung (17) oder eines sonstigen elektrischen Anschlussmoduls am verbleibenden Anschlusspol des letzten Einzelakkumulators (15)
wobei die Stromschienenelemente (2, 3, 4, 5, 6) wenigstens ein elektrisch leitendes Verbinderelement (30), das elektrisch mit den jeweils zwei Anschlusspolen verbunden ist, und eine Isolationskappe (35) aus isolierendem Material aufweisen, wobei die Isolationskappe (35) an dem Verbinderelement (30) fixiert wird und über das Verbinderelement (30) in Richtung zu wenigstens einem benachbarten Stromschienenelement (2, 3, 4, 5, 6) hinausragt und mittels des hinausragenden Bereichs (37) das benachbarte Stromschienenelement (2, 3, 4, 5, 6) wenigstens teilweise überdeckt, wobei durch die konstruktive Gestaltung eine bestimmte Montagereihenfolge dieser Stromschienenelemente vorgegeben ist, wobei der hinausragende Bereich (37) einen Verbinderaufnahmebereich (36) einer Isolationskappe (35) eines benachbarten Stromschienenelements (2, 3, 4, 5, 6) überdeckt.

11. Verfahren nach Anspruch 10, **dadurch gekennzeichnet, dass** das Anbringen des Stromschienenelements (2, 3, 4, 5, 6) im Schritt c) und/oder d) wie folgt durchgeführt wird:
i) Mechanisches Ankoppeln der Isolationskappe (35) des Stromschienenelements (2, 3, 4, 5, 6) an einem benachbarten Stromschienenelement (2, 3, 4, 5, 6) mittels wenigstens eines an der Isolationskappe (35) des Stromschienenelements (2, 3, 4, 5, 6) vorhandenen Zusatzbefestigungsmittels (38),
ii) Anbringen eines Verbinderelements (30) des Stromschienenelements (2, 3, 4, 5, 6) an den Anschlusspolen durch Polbefestigungsmittel (33, 34), die durch Öffnungen (43, 44) der Isolationskappe (35) hindurch mittels eines Werkzeugs (8) betätigt werden.

12. Verfahren nach Anspruch 11, **dadurch gekennzeichnet, dass** nach dem Schritt i) und vor dem Schritt ii) das Stromschienenelement (2, 3, 4, 5, 6) durch eine Verschwenkbewegung in eine Montageposition gebracht wird, in der der Schritt ii) erst durchgeführt werden kann.

## Claims

1. Rechargeable battery arrangement (1) which has a plurality of individual rechargeable batteries (10, 11, 12, 13, 14, 15) which are connected in series,
wherein each individual rechargeable battery (10, 11, 12, 13, 14, 15) has, as connection poles which are accessible from the outside, at least one positive pole and one negative pole,
wherein busbar elements (2, 3, 4, 5, 6) are fastened to the connection poles for forming the series circuit, which busbar elements each connect a negative pole of one individual rechargeable battery to a positive pole of another individual rechargeable battery,
wherein the busbar elements (2, 3, 4, 5, 6) have at least one electrically conductive connector element (30), which is electrically connected to the in each case two connection poles, and one insulating cap (35) composed of insulating material,
wherein the insulating cap (35) is fixed to the connector element (30) and protrudes beyond the connector element (30) in the direction towards at least one adjacent busbar element (2, 3, 4, 5, 6) and at least partially covers the adjacent busbar element (2, 3, 4, 5, 6) by means of the protruding region (37),
wherein a specific fitting sequence for these busbar elements is prespecified by the structural design,
**characterized in that**
the protruding region (37) overlaps a connector receiving region (36) of an insulating cap (35) of an adjacent busbar element (2, 3, 4, 5, 6).

2. Rechargeable battery arrangement according to Claim 1,
**characterized in that**
a busbar element (2, 3, 4, 5, 6) at least partially overlaps an adjacent busbar element (2, 3, 4, 5, 6).

3. Rechargeable battery arrangement according to Claim 1 or 2, **characterized in that**
the insulating cap (35) of the busbar element (2, 3, 4, 5, 6) has at least one opening (43, 44) which allows access to the connector element (30) of the busbar element (2, 3, 4, 5, 6) or to a pole fastening means (33, 34) for fastening the connector element (30) to a connection pole through the insulating cap (35).

4. Rechargeable battery arrangement according to Claim 3,
**characterized in that**
the protruding region (37) of the insulating cap (35) overlaps the at least one opening (43, 44) of the insulating cap (35) of an adjacent busbar element (2, 3, 4, 5, 6).

5. Rechargeable battery arrangement according to one of Claims 1 to 4, **characterized in that**
the connector element (30) is fixed to the insulating cap (35) by way of a hinge connection, a snap-action connection (40) or other releasable or non-releasable connecting means.

6. Rechargeable battery arrangement according to one of Claims 1 to 5, **characterized in that**
the insulating cap (35) has at least one additional fastening means (38) for fastening the busbar element (2, 3, 4, 5, 6) to an adjacent busbar element.

7. Rechargeable battery arrangement according to one of Claims 1 to 6, **characterized in that**
the busbar element (2, 3, 4, 5, 6) has at least one receiving chamber (41, 42) for receiving a pole fastening means (33, 34) for fastening the connector element (30) to a connection pole.

8. Rechargeable battery arrangement according to one of the preceding claims,
**characterized in that**
the rechargeable battery arrangement (1) has at least one electrical external connection (20) which is designed for providing the rechargeable battery energy to an energy consumer, wherein the external connection (20) can be connected to an energy consumer by way of an external connection element (7), and wherein the external connection element (7) at least partially overlaps an adjacent busbar element (2, 3, 4, 5, 6).

9. Busbar element (2, 3, 4, 5, 6) for a rechargeable battery arrangement (1) according to one of the preceding claims,
**characterized in that**
the busbar element (2, 3, 4, 5, 6) has at least one electrically conductive connector element (30), which is to be electrically connected to in each case two connection poles of individual rechargeable batteries (10, 11, 12, 13, 14, 15), and an insulating cap (35) composed of insulating material, which insulating cap is fixed to the connector element (30) by way of connecting means (40),
wherein the insulating cap (35) protrudes beyond the connector element (30) in such a way that an adjacent busbar element (2, 3, 4, 5, 6) of the series circuit of the individual rechargeable batteries (10, 11, 12, 13, 14, 15) can be at least partially overlapped by means of the protruding region (37),
**characterized in that**
the protruding region (37) overlaps a connector receiving region (36) of an insulating cap (35) of an adjacent busbar element (2, 3, 4, 5, 6).

10. Method for producing a rechargeable battery arrangement (1) according to one of Claims 1 to 8, comprising the following steps:
a) providing the individual rechargeable batteries (10, 11, 12, 13, 14, 15) which are to be interconnected to form a series circuit,
b) attaching an electrical connection line (18) or another electrical connection module (16) to a connection pole of the first individual rechargeable battery (10) of the series circuit,
c) attaching a busbar element (2) to the other connection pole of the first individual rechargeable battery (10) and to a connection pole of the next individual rechargeable battery (11) of the series circuit,
d) attaching a busbar element (3, 4, 5, 6) to the other connection pole of the preceding individual rechargeable battery (11, 12, 13, 14) and to a connection pole of the next individual rechargeable battery (12, 13, 14, 15) of the series circuit in such a way that an adjacent busbar element which is already fitted is at least partially overlapped,
e) repeating step d) until the last individual rechargeable battery (15) of the series circuit is connected to the penultimate individual rechargeable battery (14) by way of a busbar element (6),
f) attaching an electrical connection line (17) or another electrical connection module to the remaining connection pole of the last individual rechargeable battery (15),
wherein the busbar elements (2, 3, 4, 5, 6) have at least one electrically conductive connector element (30), which is electrically connected to the in each case two connection poles, and an insulating cap (35) composed of insulating material, wherein the insulating cap (35) is fixed to the connector element (30) and protrudes beyond the connector element (30) in the direction towards at least one adjacent busbar element (2, 3, 4, 5, 6) and at least partially overlaps the adjacent busbar element (2, 3, 4, 5, 6) by means of the protruding region (37), wherein a specific fitting sequence for these busbar elements is prespecified by the structural design, wherein the protruding region (37) overlaps a connector receiving region (36) of an insulating cap (35) of an adjacent busbar element (2, 3, 4, 5, 6).

11. Method according to Claim 10,
**characterized in that**
attaching the busbar element (2, 3, 4, 5, 6) in step c) and/or d) is carried out as follows:
i) mechanically coupling the insulating cap (35) of the busbar element (2, 3, 4, 5, 6) to an adjacent busbar element (2, 3, 4, 5, 6) by means of at least one additional fastening means (38) which is present on the insulating cap (35) of the busbar element (2, 3, 4, 5, 6),
ii) attaching a connector element (30) of the busbar element (2, 3, 4, 5, 6) to the connection poles by pole fastening means (33, 34) which are operated by means of a tool (8) through openings (43, 44) of the insulating cap (35).

12. Method according to Claim 11,
**characterized in that**,
after step i) and before step ii), the busbar element (2, 3, 4, 5, 6) is moved by a pivoting movement to a fitting position in which step ii) can first be carried out.

## Revendications

1. Arrangement d'accumulateurs (1), qui possède plusieurs accumulateurs individuels (10, 11, 12, 13, 14, 15) branchés en série, chaque accumulateur individuel (10, 11, 12, 13, 14, 15) possédant au moins un pôle positif et un pôle négatif sous la forme de pôles de raccordement accessibles depuis l'extérieur, des éléments de barre-bus (2, 3, 4, 5, 6) étant fixés aux pôles de raccordement en vue de former le circuit série, lesquels relient respectivement un pôle négatif d'un accumulateur individuel à un pôle positif d'un autre accumulateur individuel, les éléments de barre-bus (2, 3, 4, 5, 6) possédant au moins un élément connecteur (30) électriquement conducteur, qui est relié électriquement aux deux pôles de raccordement respectifs, et un capuchon isolant (35) en matériau isolant, le capuchon isolant (35) étant fixé à l'élément connecteur (30) et faisant saillie au-dessus de l'élément connecteur (30) en direction d'au moins un élément de barre-bus (2, 3, 4, 5, 6) voisin et recouvrant l'élément de barre-bus (2, 3, 4, 5, 6) voisin au moins partiellement au moyen de la zone faisant saillie (37), une séquence de montage donnée de ces éléments de barre-bus étant prédéfinie par la configuration constructive,
**caractérisé en ce que**
la zone faisant saillie (37) recouvre une zone d'accueil de connecteur (36) d'un capuchon isolant (35) d'un élément de barre-bus (2, 3, 4, 5, 6) voisin.

2. Arrangement d'accumulateurs selon la revendication 1,
**caractérisé en ce que**
'un élément de barre-bus (2, 3, 4, 5, 6) recouvre au moins partiellement un élément de barre-bus (2, 3, 4, 5, 6) voisin.

3. Arrangement d'accumulateurs selon la revendication 1 ou 2, **caractérisé en ce que**
le capuchon isolant (35) de l'élément de barre-bus (2, 3, 4, 5, 6) comprend au moins une ouverture (43, 44) qui permet un accès à l'élément connecteur (30) de l'élément de barre-bus (2, 3, 4, 5, 6) ou d'un moyen de fixation de pôle (33, 34) servant à la fixation de l'élément connecteur (30) à un pôle de raccordement à travers le capuchon isolant (35).

4. Arrangement d'accumulateurs selon la revendication 3,
**caractérisé en ce que**
la zone faisant saillie (37) du capuchon isolant (35) recouvre l'au moins une ouverture (43, 44) du capuchon isolant (35) d'un élément de barre-bus (2, 3, 4, 5, 6) voisin.

5. Arrangement d'accumulateurs selon l'une des revendications 1 à 4, **caractérisé en ce que**
l'élément connecteur (30) est fixé au capuchon isolant (35) par le biais d'une liaison par charnière, d'une liaison à enclipsage (40) ou d'un autre moyen de liaison libérable ou non libérable.

6. Arrangement d'accumulateurs selon l'une des revendications 1 à 5, **caractérisé en ce que**
le capuchon isolant (35) possède au moins un moyen de fixation supplémentaire (38) destiné à fixer l'élément de barre-bus (2, 3, 4, 5, 6) à un élément de barre-bus voisin.

7. Arrangement d'accumulateurs selon l'une des revendications 1 à 6, **caractérisé en ce que**
l'élément de barre-bus (2, 3, 4, 5, 6) possède au moins deux chambres d'accueil (41, 42) destinées à accueillir un moyen de fixation de pôle (33, 34) servant à la fixation de l'élément connecteur (30) à un pôle de raccordement.

8. Arrangement d'accumulateurs selon l'une des revendications précédentes, **caractérisé en ce que**
l'arrangement d'accumulateurs (1) possède au moins une borne externe électrique (20) qui est conçue pour fournir l'énergie d'accumulateur à un récepteur d'énergie, la borne externe (20) pouvant être reliée à un récepteur d'énergie par le biais d'un élément de raccordement externe (7), et l'élément de raccordement externe (7) recouvrant au moins partiellement un élément de barre-bus (2, 3, 4, 5, 6) voisin.

9. Élément de barre-bus (2, 3, 4, 5, 6) pour un arrangement d'accumulateurs (1) selon l'une des revendications précédentes
**caractérisé en ce que**
l'élément de barre-bus (2, 3, 4, 5, 6) possède au moins un élément connecteur (30) électriquement conducteur, qui est relié électriquement respectivement à deux pôles de raccordement respectifs d'accumulateurs individuels (10, 11, 12, 13, 14, 15), et un capuchon isolant (35) en matériau isolant, lequel est fixé à l'élément connecteur (30) par le biais de moyens de liaison (40), le capuchon isolant (35) faisant saillie au-dessus de l'élément connecteur (30) de telle sorte qu'un élément de barre-bus (2, 3, 4, 5, 6) voisin du circuit série des accumulateurs individuels (10, 11, 12, 13, 14, 15) peut être recouvert au moins partiellement au moyen de la zone faisant saillie (37),
**caractérisé en ce que**
la zone faisant saillie (37) recouvre une zone d'accueil de connecteur (36) d'un capuchon isolant (35) d'un élément de barre-bus (2, 3, 4, 5, 6) voisin.

10. Procédé de fabrication d'un arrangement d'accumulateurs (1) selon l'une des revendications 1 à 8, comprenant les étapes suivantes :
a) fourniture des accumulateurs individuels (10, 11, 12, 13, 14, 15) à brancher ensemble en un circuit série,
b) pose d'une ligne de raccordement électrique (18) ou d'un autre module de raccordement électrique (16) sur un pôle de raccordement du premier accumulateur individuel (10) du circuit série,
c) pose d'un élément de barre-bus (2) sur l'autre pôle de raccordement du premier accumulateur individuel (10) et un pôle de raccordement de l'accumulateur individuel suivant (11) du circuit série,
d) pose d'un élément de barre-bus (3, 4, 5, 6) sur l'autre pôle de raccordement de l'accumulateur individuel précédent (11, 12, 13, 14) et un pôle de raccordement de l'accumulateur individuel suivant (12, 13, 14, 15) du circuit série de telle sorte qu'un élément de barre-bus voisin déjà monté est au moins partiellement recouvert,
e) répétition de l'étape d) jusqu'à ce que le dernier accumulateur individuel (15) du circuit série soit relié à l'avant-dernier accumulateur individuel (14) par le biais d'un élément de barre-bus (6),
f) pose d'une ligne de raccordement électrique (17) ou d'un autre module de raccordement électrique sur le pôle de raccordement restant du dernier accumulateur individuel (15)
les éléments de barre-bus (2, 3, 4, 5, 6) possédant au moins un élément connecteur (30) électriquement conducteur, qui est relié électriquement aux deux pôles de raccordement respectifs, et un capuchon isolant (35) en matériau isolant, le capuchon isolant (35) étant fixé à l'élément connecteur (30) et faisant saillie au-dessus de l'élément connecteur (30) en direction d'au moins un élément de barre-bus (2, 3, 4, 5, 6) voisin et recouvrant l'élément de barre-bus (2, 3, 4, 5, 6) voisin au moins partiellement au moyen de la zone faisant saillie (37), une séquence de montage donnée de ces éléments de barre-bus étant prédéfinie par la configuration constructive, la zone faisant saillie (37) recouvrant une zone d'accueil de connecteur (36) d'un capuchon isolant (35) d'un élément de barre-bus (2, 3, 4, 5, 6) voisin.

11. Procédé selon la revendication 10, **caractérisé en ce que** la pose d'un élément de barre-bus (2, 3, 4, 5, 6) à l'étape c) et/ou d) est effectuée comme suit :
i) accouplement mécanique du capuchon isolant (35) de l'élément de barre-bus (2, 3, 4, 5, 6) à un élément de barre-bus (2, 3, 4, 5, 6) voisin au moyen d'au moins un moyen de fixation supplémentaire (38) présent au niveau du capuchon isolant (35) de l'élément de barre-bus (2, 3, 4, 5, 6),
ii) pose d'un élément de liaison (30) de l'élément de barre-bus (2, 3, 4, 5, 6) sur les pôles de raccordement par des moyens de fixation de pôle (33, 34) qui sont actionnés au moyen d'un outil à travers des ouvertures (43, 44) du capuchon isolant (35).

12. Procédé selon la revendication 11,
**caractérisé en ce que**
'après l'étape i) et avant l'étape ii), l'élément de barre-bus (2, 3, 4, 5, 6) est amené par un mouvement de pivotement dans une position de montage dans laquelle seulement peut être exécutée l'étape ii).
